Europäisches Patentamt

European Patent Office

Office européen des brevets

(19)

(11) Numéro de publication: **0 063 985**
**B1**

(12) **FASCICULE DE BREVET EUROPEEN**

(45) Date de publication du fascicule du brevet:
27.03.85

(51) Int. Cl.⁴: **B 25 J 5/00**

(21) Numéro de dépôt: **82400642.3**

(22) Date de dépôt: **07.04.82**

(54) **Dispositif pour le positionnement d'un organe vis-à-vis des perforations d'une plaque à tubes.**

(30) Priorité: **10.04.81 FR 8107243**

(43) Date de publication de la demande:
**03.11.82 Bulletin 82/44**

(45) Mention de la délivrance du brevet:
**27.03.85 Bulletin 85/13**

(84) Etats contractants désignés:
**AT BE CH DE GB IT LI LU NL SE**

(56) Documents cités:
**EP - A - 0 014 616**
**EP - A - 0 063 073**
**FR - A - 2 394 374**

(73) Titulaire: **COMMISSARIAT A L'ENERGIE ATOMIQUE
Etablissement de Caractère Scientifique Technique et
Industriel, 31/33, rue de la Fédération, F-75015 Paris (FR)**

(84) Etats contractants désignés: **BE CH DE GB IT LI NL SE**

(73) Titulaire: **INTERCONTROLE Société Anonyme, 15, rue
des Solets Zone Silic 433, F-94583 Rungis Cedex (FR)**

(84) Etats contractants désignés: **LU AT**

(72) Inventeur: **Pigeon, Michel, 14, Avenue du Maréchal Foch,
F-91440 Bures sur Yvette (FR)**
Inventeur: **Saglio, Robert, 9, rue des Marchais,
F-92160 Antony (FR)**

(74) Mandataire: **Mongrédien, André et al, c/o
BREVATOME 25, rue de Ponthieu, F-75008 Paris (FR)**

## Description

La présente invention concerne un dispositif pour le positionnement d'un organe en vis-à-vis de chacune des perforations d'une plaque perforée selon un réseau donné ainsi qu'un procédé permettant d'effectuer le montage et le démontage à distance d'un tel dispositif.

De façon plus précise, l'invention concerne un dispositif permettant de positionner un tube guide en vis-à-vis de chacun des tubes d'un générateur de vapeur tels que ceux qui équipent les centrales nucléaires, afin d'introduire successivement dans chacun des tubes un dispositif de contrôle tel qu'une sonde à courants de Foucault.

On sait que les tubes des générateurs de vapeur équipant les centrales nucléaires sont soumis à des conditions de fonctionnement particulièrement sévères qui conduisent à contrôler périodiquement l'état de ces tubes afin de condamner les tubes endommagés en les obturant à chacune de leurs extrémités. Pour effectuer ce contrôle, il est nécessaire de pouvoir disposer d'un dispositif automatique pouvant être introduit à l'intérieur de la boîte à eau du générateur de vapeur et commandé de l'extérieur. En effet, il est souhaitable de réduire autant que possible et même, si possible, de supprimer les interventions humaines à l'intérieur de la boîte à eau en raison du caractère fortement irradié de cette dernière et de son exiguité. Pour les mêmes raisons, on comprend que ce dispositif doit aussi être particulièrement fiable et permettre de réaliser un contrôle de la totalité des tubes sans qu'il soit nécessaire d'intervenir manuellement. De plus, les mêmes impératifs rendent particulièrement souhaitable la réalisation d'un dispositif pouvant être monté et démonté à distance. Enfin, les moyens assurant le déplacement du dispositif à l'intérieur de la boîte à eau du générateur doivent permettre si nécessaire de sauter un ou plusieurs tubes. En effet, les extrémités obturées des tubes condamnés interdisent d'utiliser les perforations correspondantes de la plaque pour assurer le déplacement du dispositif.

On connaît un dispositif de positionnement comprenant deux bras perpendiculaires munis d'organes leur permettant de s'accrocher indépendamment l'un de l'autre dans les extrémités des tubes et pouvant se déplacer l'un par rapport à l'autre selon trois directions perpendiculaires, de façon à amener des tubes guides portés par les bras en vis-à-vis de la totalité des tubes du générateur de vapeur.

Ce dispositif permet de réaliser un contrôle complet et à distance en un temps relativement court de l'ensemble des tubes du générateur de vapeur. Toutefois, il présente l'inconvénient de devoir être mis en place et retiré manuellement par un opérateur pénétrant dans la boîte à eau. Il doit aussi être équipé de quatre ou même cinq tubes guide afin de permettre un balayage complet de la plaque à tubes. En pratique, cela signifie que l'appareillage permettant d'injecter la sonde à courants de Foucault doit être déconnecté de l'un des tubes guides et raccordé à un autre de ces tubes lorsque la zone à atteindre l'exige. Cette opération nécessite une intervention manuelle qu'il serait également souhaitable de supprimer pour les raisons mentionnées précédemment. De plus, le déplacement de ce dispositif ne permet pas de balayer correctement la plaque à tubes lorsqu'un nombre important de tubes est condamné. Enfin, ce dispositif est d'un poids non négligeable qui n'est pas toujours compatible avec les opérations auxquelles il est soumis.

Par ailleurs, le document EP-A-0 063 073, non publié lors du dépôt de la présente demande, mais bénéficiant d'une date antérieure, décrit un dispositif de positionnement dont le déplacement s'effectue à la fois par rotation autour de l'un du moins des éléments d'accrochage et par un déplacement relatif entre chacune des parties du dispositif portant les éléments d'accrochage.

La présente invention a principalement pour objet un dispositif simple permettant de réaliser un contrôle automatique, rapide, fiable et complet de l'ensemble des tubes d'un générateur de vapeur sans nécessiter aucune intervention humaine à l'intérieur de la boîte à eau du générateur, ainsi qu'un procédé de mise en place et de démontage utilisant un tel dispositif.

A cet effet et conformément à la présente invention, il est proposé un dispositif pour le positionnement d'un organe en vis-à-vis de chacune des perforations d'une plaque perforée selon un réseau donné, comprenant un corps portant au moins deux éléments d'accrochage, des moyens pour déplacer ces éléments selon une direction perpendiculaire à la plaque indépendamment l'un de l'autre, de façon à les introduire ou à les extraire d'une perforation en vis-à-vis, des moyens pour fixer chacun des éléments d'accrochage dans une perforation et des moyens pour déplacer l'un des éléments par rapport à l'autre, caractérisé en ce qu'il comprend un doigt d'accrochage présentant une surface de guidage sur laquelle est monté de façon démontable le reste du dispositif et des moyens de verrouillage à distance permettant de solidariser le reste du dispositif du doigt d'accrochage, ce dernier comportant l'un des éléments d'accrochage.

Grâce à ces caractéristiques, on comprend que le doigt d'accrochage peut être mis en place à distance à l'aide d'une perche ou d'une gaffe et que le reste du dispositif peut ensuite être enfilé sur la surface de guidage, également à distance, par exemple en montant un tuyau souple sur le doigt avant sa mise en place.

Selon un premier mode de réalisation de l'invention, les moyens de verrouillage à distance comprennent un loquet dont le pivotement est commandé à distance par un moteur électrique.

Selon un deuxième mode de réalisation de l'invention, les moyens de verrouillage à distance comprennent un cliquet qui vient s'engager dans une encoche, et un pion de déverrouillage qui vient dégager le cliquet de l'encoche lorsqu'il est sollicité par des moyens appropriés tels qu'un anneau dont le déplacement est commandé à distance à l'aide d'un câble ou de tout moyen analogue.

De préférence, les éléments d'accrochage sont alignés sur une même rangée de perforations et les moyens pour déplacer l'un des éléments par rapport à l'autre comprennent des moyens pour déplacer chaque élément par rapport à l'autre selon la direction définie par ladite rangée de perforations, sur une distance égale à au moins un pas du réseau, afin de déplacer le dispositif pas à pas selon cette direction et des moyens pour faire pivoter le dispositif autour d'au moins l'un des éléments d'accrochage afin de changer la direction de déplacement du dispositif, le corps étant réalisé en au moins deux parties portant chacune l'un des éléments d'accrochage.

Conformément à une première variante de réalisation de l'invention, le dispositif comprend deux éléments d'accrochage.

Conformément à une deuxième variante de réalisation de l'invention, le dispositif comprend trois éléments d'accrochage alignés et le doigt d'accrochage comporte alors l'élément intermédiaire.

L'invention a également pour objet un procédé de montage à distance d'un tel dispositif dans la boîte à eau dun générateur de vapeur, ce procédé étant caractérisé en ce qu'il comprend les étapes successives suivantes:

— mise en place du doigt d'accrochage dans une perforation de la plaque au moyen d'une perche par un trou d'homme formé dans la boîte à eau, et d'un organe de guidage semirigide reliant le doigt d'accrochage à l'extérieur de la boîte à eau en passant par le trou d'homme,
— mise en place du reste du dispositif par enfilage sur cet organe de guidage, et
— verrouillage du reste du dispositif sur le doigt d'accrochage.

On décrira maintenant, à titre d'exemple non limitatif, plusieurs modes de réalisation de l'invention en se référant aux dessins annexés dans lesquels:
— la figure 1 est une vue de dessous illustrant un premier mode de réalisation du dispositif selon l'invention accroché en-dessous de la plaque à tubes d'un générateur de vapeur,
— la figure 2 est une vue en coupe selon la ligne II-II de la figure 1,
— les figures 3a à 3c montrent différentes étapes du procédé de mise en place du dispositif des figures 1 et 2 à l'intérieur de l'une des chambres de la boîte à eau d'un générateur de vapeur dont l'extrémité inférieure est représentée de façon schématique,
— la figure 4 est une vue en coupe transversale illustrant un second mode de réalisation de l'invention et notamment des moyens commandant le verrouillage et le déverrouillage à distance du dispositif sur son doigt de centrage, et
— la figure 5 est une vue de dessous comparable à la figure 1 illustrant une variante de réalisation du dispositif selon l'invention.

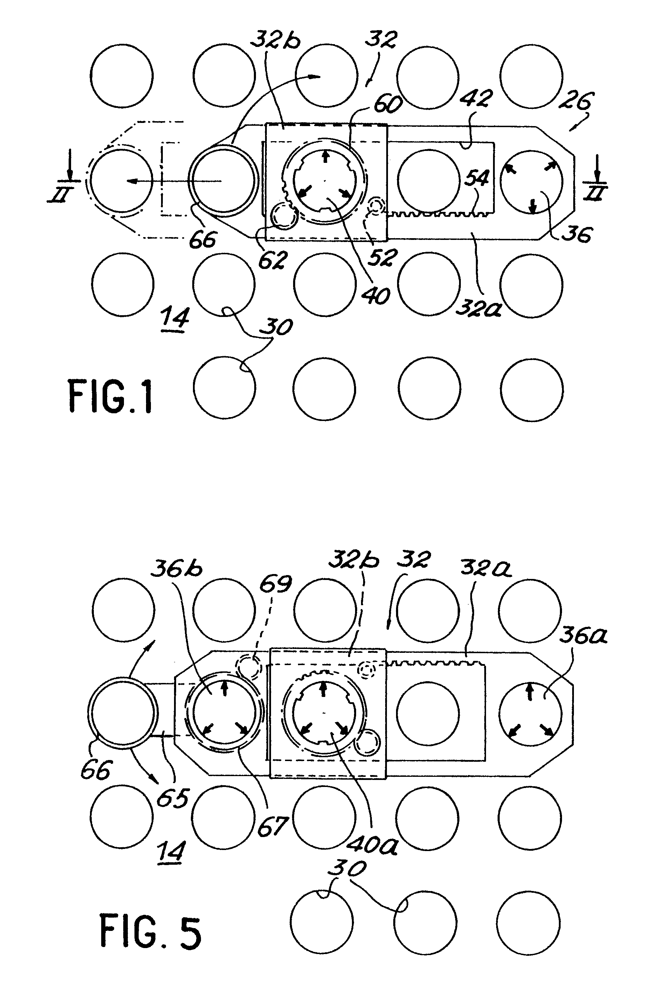

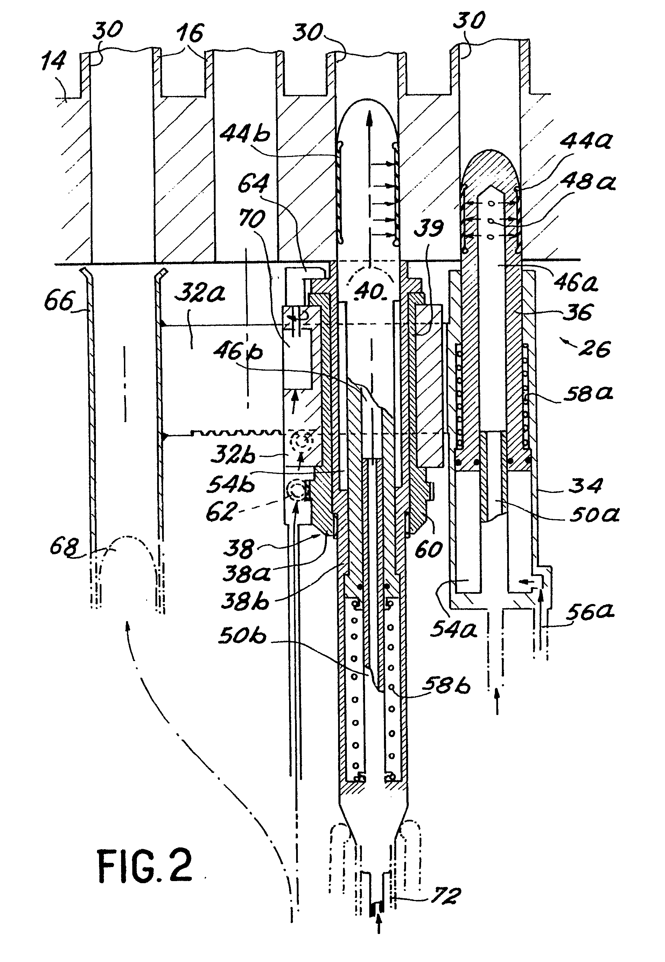

On voit sur les figures 1 et 2 une petite partie de la plaque à tubes 14 d'un générateur de vapeur destiné par exemple à assurer l'échange de chaleur entre les circuits primaire et secondaire d'une centrale nucléaire. La plaque à tubes 14 est percée d'un très grand nombre de trous ou perforations 30 dans lesquels sont fixés des tubes en U dont seule l'extrémité inférieure est représentée en 16 sur la figure 2. Les extrémités des tubes 16 débouchent dans des chambres d'entrée et de sortie d'une boîte à eau définie endessous de la plaque à tubes 14. Dans la variante de réalisation représentée sur les figures, les perforations 30 réalisées dans la plaque à tubes 14 définissent un réseau à maille carrée. Toutefois, dans des variantes non représentées, le réseau formé par les perforations peut être différent et notamment définir des mailles en forme de triangles équilatéraux.

Conformément à l'invention, un dispositif 26 peut être introduit dans l'une des chambres de la boîte à eau du générateur de vapeur par un procédé de manipulation à distance qui sera décrit ultérieurement. Ce dispositif est conçu de façon à s'accrocher aux perforations 30 et à pouvoir se déplacer le long de ces perforations grâce à un système de commande à distance approprié. Le dispositif 26 est destiné à permettre un contrôle à distance de l'ensemble des tubes 16 au moyen d'une sonde à courants de Foucault introduite par un ou plusieurs tubes guides 66, comme on le verra ultérieurement. Le dispositif 26 est également conçu pour réaliser ce contrôle dans un temps aussi court que possible et pour tenir compte du fait que certains des tubes sont obturés et ne peuvent donc servir à son accrochage.

Afin de prendre en compte ces différents impératifs, on voit sur les figures 1 et 2 que le dispositif selon l'invention comprend dans un premier mode de réalisation un corps 32 comportant une partie rectiligne formant glissière 32a et un coulisseau 32b susceptible de se déplacer sur la partie 32a. La partie rectiligne 32a définit à l'une de ses extrémités un cylindre vertical 34 dans lequel est reçu de façon coulissante un élément d'accrochage 36 en forme de piston.

Pour assurer son accrochage dans un tube 30, l'extrémité de l'élément 36 est revêtue à sa périphérie d'une membrane souple 44a fixée de façon étanche à l'élément 36 de façon à pouvoir être gonflée au moyen d'un fluide sous pression tel que de l'air. Ce fluide est injecté par un passage axial 46a et par des trous radiaux 48a débouchant sur la face interne de la membrane 44a. L'injection du fluide dans le passage 46a peut être effectuée par un tuyau souple 50a raccordé de façon étanche à l'extrémité inférieure du cylindre 34. Le gonflage de la membrane 44a a pour effet de comprimer cette membrane contre la paroi du tube, assurant ainsi la fixation de l'élément 36.

L'autre extrémité de la partie 32a porte de façon rigide dans la variante représentée le tube guide 66 qui est relié à un système d'injection de sonde à courants de Foucault externe (non représenté) par un tuyau souple traversant le trou d'homme comme l'ensemble des câbles et des tuyauteries de commande du dispositif 26. On a représenté schématiquement en 68 l'extrémité d'une sonde à courants de Foucault sur le point d'être injectée dans l'un des tubes du générateur de vapeur.

Comme le montrent les figures 1 et 2, la distance séparant l'axe du piston 36 de l'axe du tube guide 66 est égale dans la variante décrite à quatre fois le pas défini par le réseau de perforations 30. Ainsi, quand l'extrémité de l'élément de fixation 36 est introduite dans une perforation 30, le tube guide 66 est placé en vis-à-vis d'une autre perforation 30 séparée de la première par deux perforations intermédiaires.

Comme la partie 32a, le coulisseau 32b comprend un cylindre à axe vertical 38 dans lequel est reçu de façon coulissante un élément d'accrochage en forme de piston 40. Comme l'élément 36, l'élément 40 peut s'accrocher par son extrémité à l'intérieur d'une perforation 30. A cet effet, il est également muni d'une membrane cylindrique souple 44b dont les extrémités sont fixées de façon étanche sur l'élément 40, de telle sorte que la membrane 44b peut être pressée contre la paroi interne de la perforation en vis-à-vis en appliquant sur sa face interne un fluide sous pression tel que de l'air. Ce fluide est injecté par un passage central 46b alimenté par un tuyau souple 50b qui, à l'extérieur du cylindre 38, passe dans un tuyau de guidage 72.

Pour permettre le passage du coulisseau 32b, on voit sur la figure 1 que la partie 32a présente une ouverture centrale 42. Plus précisément, cette ouverture 42 est conçue de façon à permettre au coulisseau 32b de se déplacer entre deux positions dans lesquelles l'axe de l'élément 40 est aligné avec l'une ou avec l'autre des perforations 30 situées entre l'élément d'accrochage 36 et le tube guide 66. Pour commander le déplacement relatif entre la partie 32a et le coulisseau 32b, on a prévu des moyens qui sont constitués dans le mode de réalisation représenté par un moteur électrique (non représenté) porté par le coulisseau 32b et commandant la rotation d'un pignon 52 qui vient s'engrener sur une crémaillère 54 formée sur la partie rectiligne 32a.

En outre, des moyens sont prévus pour commander le déplacement des éléments d'accrochage 36 et 40 respectivement à l'intérieur des cylindres 34 et 38 afin d'introduire ces éléments dans les perforations 30 et de les faire sortir de ces perforations. Dans la variante de réalisation représentée sur la figure 2, ces moyens sont constitués, pour l'élément 36, par une chambre à volume variable 54a définie entre le cylindre 34 et l'élément 36. Un fluide sous pression tel que de l'air peut être injecté dans la chambre 54a par un tuyau 56 pour solliciter l'élément 36 vers l'intérieur d'une perforation 30. Un ressort 58a agit en sens inverse pour faire sortir l'extrémité de l'élément 36 de la perforation 30 lorsque la pression est relâchée. Un déplacement comparable de l'élément d'accrochage 40 peut être obtenu au moyen d'une chambre à volume variable 54b alimentée par un conduit (non représenté) et d'un ressort antagoniste 58b.

Grâce à la combinaison des caractéristiques qui viennent d'être décrites, on voit qu'il est possible de déplacer le tube guide 66 pas-à-pas le long d'une rangée de perforations 30 pour effectuer le contrôle des tubes correspondant à cette rangée. En effet, si l'on part de la position représentée sur la figure 2 dans laquelle les éléments d'accrochage 36 et 40 sont fixés dans deux perforations voisines et si l'on souhaite se déplacer vers la gauche, il suffit de dégonfler la membrane 44b afin de dégager celle-ci de la paroi interne de la perforation 30 correspondante, puis de sortir l'élément 40 de cette perforation en relâchant la pression dans la chambre 54b. Le moteur commandant le déplacement du coulisseau 32b par rapport à la partie 32a peut alors être mis en œuvre de façon à amener ce coulisseau dans la position représentée sur la figure 1. Les opérations inverses de celles qui viennent d'être décrites sont alors effectuées afin d'introduire l'élément 40 dans la perforation 30 contiguë à celle qu'elle vient de quitter et à fixer cet élément dans cette perforation en gonflant la membrane 44b. Le déplacement de la partie 32a portant le tube guide 66 peut ensuite être effectué après avoir relâché la pression à l'intérieur de la membrane 44a et sorti l'élément d'accrochage 36 de la perforation dans laquelle il était fixé. Le dispositif se retrouve alors dans la position représentée sur la figure 2 en ayant avancé d'un pas le long de la rangée considérée. Bien entendu, un déplacement en sens inverse pourrait être obtenu en déplaçant la partie 32a avant le coulisseau 32b.

Afin de permettre au dispositif 26 de contrôler l'ensemble des rangées de perforations de la plaque à tubes 14, on a prévu des moyens permettant de faire pivoter la partie 32a ainsi que l'élément d'accrochage 36 et le tube guide 66 qu'elle supporte autour de l'élément d'accrochage 40. Cette rotation permet au dispositif de passer d'une rangée à une autre et aussi d'atteindre des tubes difficilement accessibles.

Dans la variante de réalisation représentée (figure 2), cette rotation est obtenue en montant le cylindre 38 de façon tournante dans le coulisseau 32b et en prévoyant sur le cylindre une denture 60 sur laquelle vient s'engrener un pignon 62 commandé par un moteur électrique (non représenté) porté par le coulisseau 32b.

Bien entendu, les rotations du dispositif 26 autour de l'élément d'accrochage 40 sont commandées en fonction de la configuration de réseau de perforations 30 formées sur la plaque à tubes. Ainsi, dans le cas d'un réseau à mailles carrées telles que représentées sur la figure 1, ces rotations seront de 90° ou de 180° alors qu'elles seront de 60°, 120° ou 180° dans le cas d'un réseau à mailles triangulaires isocèles.

Dans une variante de réalisation non représentée, sur un réseau à mailles carrées, on peut envisager un dispositif pouvant également se déplacer selon une diagonale. Ce dispositif différerait du dispositif représenté sur les figures 1 et 2 par la localisation du tube guide près de l'élément d'accrochage 36 et l'allongement de la partie 32a augmentant la course disponible du coulisseau 32b. La rotation de la partie 32a autour de l'élément 40 peut alors être aussi de 45°.

Conformément à l'invention et afin de permettre un montage et un démontage à distance de l'ensemble du dispositif comme on le décrira par la suite, l'élément d'accrochage 40 et son cylindre 38 constituent un doigt d'accrochage susceptible d'être monté indépendamment du reste du dispositif qui est mis en place et verrouillé ultérieurement sur ce doigt. A cet effet, on voit sur la figure 2 que le cylindre est réalisé en deux parties 38a, 38b solidarisées en rotation par des cannelures ou par tout moyen analogue (non représenté) mais susceptibles de coulisser l'une dans l'autre de telle sorte que la partie externe 38a et le reste du dispositif 26 auquel elle est reliée peut coulisser vers le bas sur une surface de guidage 39 formée sur la partie interne 38b dans laquelle est logé l'élément d'accrochage 40 pour permettre le montage et le démontage à distance du dispositif 26 sur cet élément 40.

Dans la variante de réalisation de la figure 2, le verrouillage du reste du dispositif 26 sur la partie interne 38b du cylindre est réalisé au moyen d'un loquet pivotant 64 monté à la partie supérieure du coulisseau 32b et dont la rotation est commandée par un moteur électrique 70. Ce moteur permet au loquet 64 soit de venir en appui sur une collerette formée à la partie supérieure de la partie 38b du cylindre afin de verrouiller le dispositif 26, soit de dégager cette collerette afin de permettre le démontage du reste du dispositif.

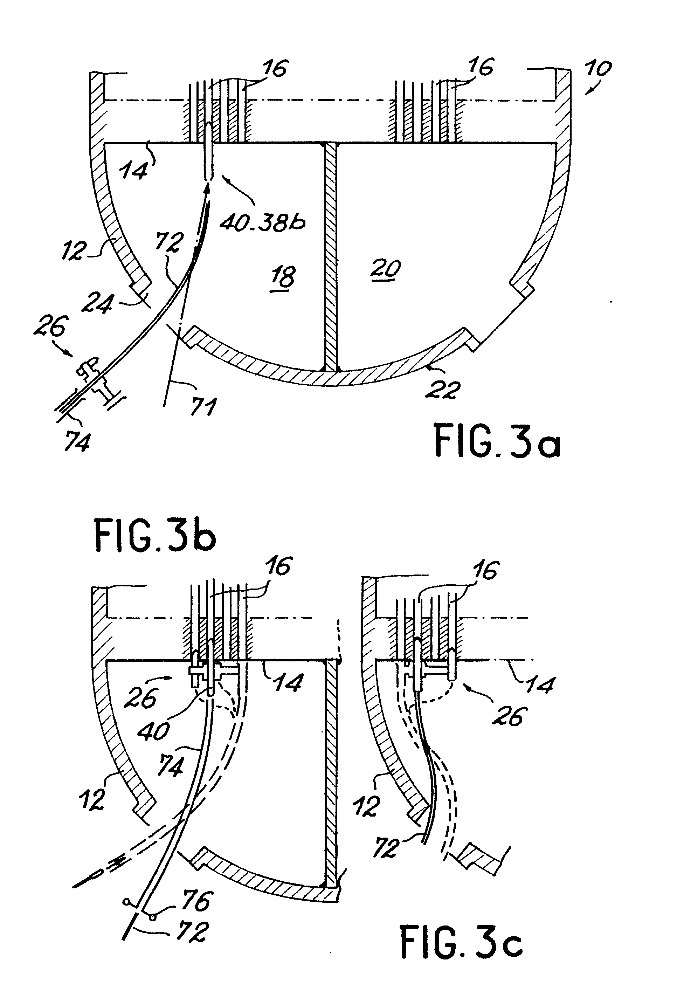

Les opérations de montage du dispositif représenté sur les figures 1 et 2 dans la boîte à eau d'un générateur de vapeur seront maintenant décrites en se référant aux figures 3a à 3c.

Sur la figure 3a, on voit l'extrémité inférieure d'un générateur de vapeur 10 dont la plaque à tubes horizontale 14 présente un grand nombre de tubes en U 16 dont seule l'extrémité inférieure est représentée. Les extrémités d'entrée et de sortie des tubes 16 débouchent respectivement dans la chambre d'entrée 18 et dans la chambre de sortie 20 de la boîte à eau 22 du générateur 10. La paroi externe 12 de chacune des chambres 18 et 20 est munie d'un trou d'homme 24 par lequel, conformément à la présente invention, on peut introduire à distance, c'est-à-dire sans que personne n'ait à pénétrer dans la boîte à eau 22, le dispositif 26 afin de contrôler les tubes par exemple au moyen d'une sonde à courants de Foucault.

Au cours d'une première étape du procédé de mise en place, le doigt d'accrochage 38b, 40 est introduit par exemple dans la chambre 18 à l'aide d'une gaffe ou d'une perche 71. L'extrémité de l'élément d'accrochage 40 est alors introduite à distance toujours à l'aide de la perche 71 et au travers du trou d'homme 24 dans l'une des perforations 30 de la plaque à tubes 14. Du fluide sous pression est injecté par le tuyau 50b afin d'assurer la fixation de l'élément 40 dans cette perforation. On voit sur la figure 3a que le reste du dispositif 26 est alors enfilé sur le tuyau souple 72 autour duquel on vient enfiler un second tuyau 74 terminé comme le montre la figure 3b par un volant 76 ou par tout système analogue permettant d'orienter à distance le dispositif 26. En faisant glisser le dispositif 26 et le tuyau 74 le long du tuyau 72, on amène sans difficulté et toujours sans intervention humaine à l'intérieur de la boîte à eau le reste du dispositif 26 sur la surface de guidage 39. Il ne reste plus alors qu'à commander à distance le moteur 70 afin de faire pivoter le loquet 64 pour l'amener au-dessus de la collerette formée à l'extrémité supérieure de la partie 38b du cylindre et verrouiller ainsi le dispositif 26. Cette opération s'effectue également à distance puisque le dispositif 26 est introduit dans la boîte à eau avec l'ensemble du faisceau de câbles et de conduites assurant sa commande ainsi qu'avec la tuyauterie souple reliant le tube guide 66 à l'appareil d'injection de la sonde à courants de Foucault. La figure 3c montre le dispositif 26 ainsi mis en place, après démontage du tuyau souple 74 et après déplacement.

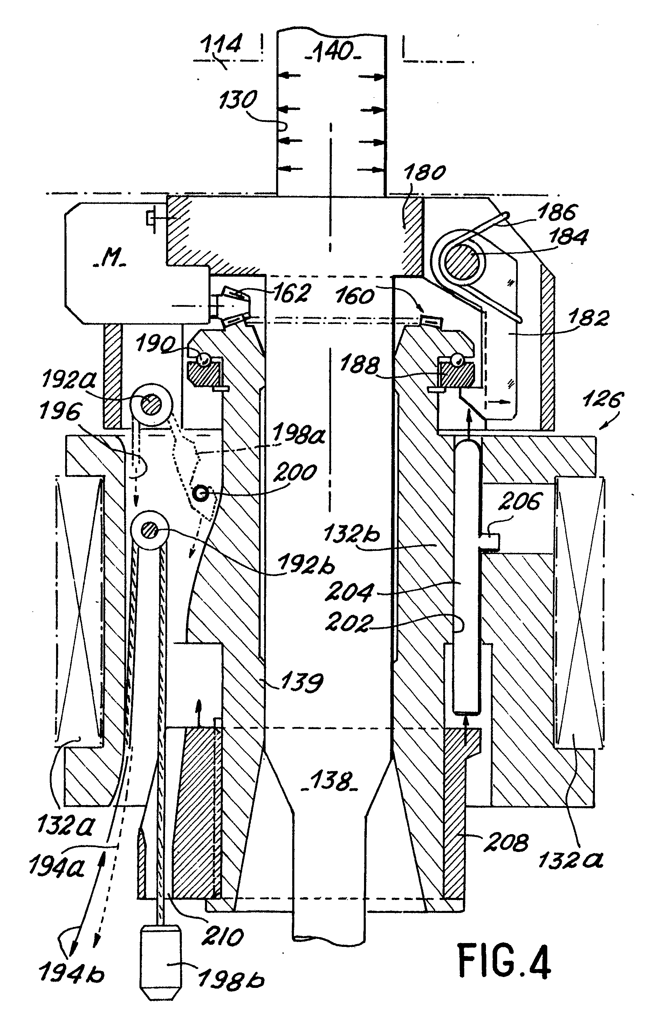

Sur la figure 4, on a représenté une variante du dispositif représentée sur les figures 1 et 2 qui se différencie essentiellement de ce dernier par la réalisation des moyens permettant l'accrochage et le décrochage à distance du dispositif sur le doigt d'accrochage. Les parties non décrites sont semblables à celles du premier mode de réalisation. Dans cette variante, les mêmes chiffres de référence augmentés de 100 ont été utilisés pour désigner des éléments semblables à ceux du premier mode de réalisation.

On voit sur la figure 4 que le cylindre 138 dans lequel est logé l'élément d'accrochage 140 dont l'extrémité est introduite dans une perforation 130 d'une plaque à tubes 114 porte à son extrémité supérieure un support 180 sur lequel est reçu, d'une part, un moteur M commandant la rotation d'un pignon 162 à axe horizontal et, d'autre part, un cliquet 182 dirigé vers le bas et monté pivotant autour d'un axe horizontal 184. Un ressort de torsion 186 sollicite le cliquet 182 vers l'axe de l'élément 140, dans la position représentée sur la figure.

Le pignon 162 vient s'engrener sur une couronne dentée 160 formée à la partie supérieure du coulisseau 132b qui est représenté ici en coupe transversale ainsi que la partie 132a sur laquelle il coulisse. En plus de la couronne dentée 160, le coulisseau 132b présente à sa partie supérieure une collerette qui se trouve au-dessus de l'extrémité du cliquet 182 lorsque ce dernier occupe la position représentée sur la figure.

Entre l'extrémité du cliquet et cette collerette on a prévu un anneau 188 sur lequel la collerette prend appui par l'intermédiaire d'un roulement à billes 190. Ce roulement se justifie par le fait que le coulisseau 132 ainsi que le reste du dispositif 126 peut tourner autour du cylindre 138 comme dans la variante des figures 1 et 2. L'extrémité du cliquet 182 est donc normalement engagée dans un évidement du coulisseau 132b formé en-dessous de l'anneau 188.

Le support 180 porte de plus une poulie 192a sur laquelle peut venir coulisser un câble 194a passant par une ouverture 196 formée dans le coulisseau. L'extrémité externe du câble 194 se prolonge hors de la boîte à eau du générateur de vapeur à contrôler alors que l'extrémité interne porte un crochet 198a apte à venir s'accrocher sur une poignée 200 formée sur le coulisseau.

Dans sa partie située en-dessous du cliquet 182, le coulisseau 132b comprend en outre un perçage vertical 202 qui est aligné avec l'extrémité du cliquet 182 lorsqu'il occupe une position correspondant au démontage du dispositif et dans lequel coulisse une tige 204 maintenue normalement en position basse par un doigt 206, de façon à faire saillie hors du coulisseau 132b par son extrémité inférieure.

Une bague 208, montée coulissante sur le coulisseau 132b et présentant un axe confondu avec celui du cylindre 138, est placée à l'extrémité inférieure du coulisseau. Plus précisément, la bague 208 est placée en dessous de l'extrémité en saillie de la tige 204. La bague 208 présente en outre un trou vertical 210 dans lequel passe un second câble 194b monté sur une poulie 192b et dont l'autre extrémité sort du générateur de vapeur. L'extrémité du câble qui passe par le trou 210 porte une pièce 198b dont la section est supérieure à celle du trou.

Le dispositif décrit en se référant à la figure 4 fonctionne de la façon suivante.

Après la mise en place du doigt comprenant l'élément d'accrochage 140 et le cylindre 138 d'une façon comparable à celle qui a été décrite en se référant à la figure 3a, le câble 194a qui a été précédemment placé sur la poulie 192a est utilisé pour monter le reste du dispositif 226. A cet effet, le crochet 198 est accroché à la poignée 200 et on tire sur l'extrémité libre du câble 194a. Lorsque le dispositif 226 arrive en partie haute à proximité de la plaque 114, le cliquet 182 s'escamote et vient maintenir automatiquement le reste du dispositif. A ce moment, le crochet 198a redescend de lui-même au travers du trou 210, par gravité et on retire le câble 194a. Le dispositif 126 est alors prêt à fonctionner.

Lorsqu'on souhaite déverrouiller le reste du dispositif du doigt d'accrochage pour le démonter, on utilise le câble 194b. En tirant sur l'extrémité du câble 194b, on amène la pièce 198b en butée contre la partie inférieure de la bague 208, qui coulisse alors vers le haut. La bague 208, en agissant sur la tige 204, dégage l'extrémité du cliquet 182 de l'évidement correspondant, à l'encontre du ressort 186. Le relâchement du câble 194b permet alors de faire redescendre le dispositif 126, seuls le cylindre 138 et l'ensemble d'accrochage 140 restant en place. Il est alors aisé de dégonfler à distance l'ensemble d'accrochage 140 pour le descendre à son tour. Comme dans la variante précédente, l'ensemble des opérations de montage et de démontage peuvent donc être effectuées à distance sans nécessiter l'intervention d'un opérateur à l'intérieur de la boîte à eau.

Bien entendu, l'invention n'est pas limitée au mode de réalisation qui vient d'être décrit à titre d'exemple mais en couvre toutes les variantes. En particulier, on voit sur la figure 5 que la partie rectiligne 32a du corps 32 peut comprendre deux éléments d'accrochage semblables 36a et 36b logés dans des cylindres montés à chacune des extrémités de la partie 32a. Bien entendu, les moyens commandant la fixation des éléments 36a et 36b dans les perforations 30 sont semblables à ceux qui ont été décrits en se référant aux figures 1 et 2. Il en est de même des moyens commandant le déplacement de ces éléments perpendiculairement à la plaque à tubes 14 pour introduire ces éléments dans les extrémités des tubes ou les sortir de ces extrémités, des moyens commandant le déplacement relatif des deux parties 32a et 32b et des moyens commandant la rotation du dispositif autour de l'élément central 40.

On voit sur la figure 5 que dans cette variante de réalisation, le second élément d'accrochage 36b de la partie 32a du corps du dispositif prend la place du tube guide 66 dans la première variante de réalisation décrite en se référant aux figures 1 et 2.

A titre d'exemple, on a aussi représenté sur la figure 5 une variante dans laquelle le tube guide 66b n'est plus directement solidaire de la partie 32a mais monté à l'extrémité d'un bras 65 qui est susceptible de pivoter autour de l'axe de l'élément d'accrochage 36b de telle sorte que le tube guide 66b peut venir en vis-à-vis de trois perforations 30 contiguës à la perforation correspondant à l'élément 36b comme l'illustrent les flèches sur la figure 5. Les moyens pour commander la rotation du bras 65 autour de l'élément 66b peuvent comprendre comme l'illustre schématiquement la figure 5 une roue dentée 67 solidaire du bras 65, centrée sur l'élément 36b et entraînée en rotation par un moteur électrique (non représenté), par l'intermédiaire d'un pignon 69.

Bien entendu, d'autres solutions sont envisageables et on peut notamment monter de façon rigide plusieurs tubes guides sur la partie 32a en les disposant par exemple à 90° par rapport à la direction définie par cette partie.

Enfin, on comprendra que les appareils assurant la commande à distance des dispositifs décrits sont bien connus des spécialistes et ne font pas partie de la présente invention. Il en est de même de l'appareil commandant l'injection de la sonde à courants de Foucault.

D'autre part, on comprendra que le dispositif a été décrit pour une avance pas-à-pas mais qu'il peut être adapté à une avance d'un nombre quelconque de pas.

Bien entendu, les différents modes de réalisation décrits peuvent subir différentes modifications mineures sans sortir du cadre de l'invention. Parmi ces modifications, on notera notamment les variantes suivantes:

— le système à crémaillère 54 permettant le déplacement du coulisseau 32b par rapport à la glissière 32a peut être remplacé par deux tiges de guidage disposées symétriquement et par des vérins;
— le coulisseau 32b peut porter plusieurs éléments d'accrochage du type de l'élément 40; par exemple, le coulisseau peut porter quatre éléments disposés selon les sommets d'un carré et alimentés deux à deux par deux générateurs d'air comprimé, ce qui permet d'assurer un meilleur positionnement angulaire et de réduire les risques de chute; chaque élément est accroché dans un orifice différent de la plaque à tubes;
— de façon comparable, la glissière 32a peut également porter plusieurs éléments d'accrochage du type de l'élément 36 et par exemple, deux éléments disposés symétriquement;
— lorsque le coulisseau 32b porte quatre éléments d'accrochage, on conçoit que la glissière 32a présente une forme rectangulaire; le tube guide 66 peut alors être situé à l'un des coins du rectangle formé par la glissière;
— le moteur électrique de rotation du coulisseau 32b par rapport à la glissière 32a peut être remplacé par un vérin rotatif auquel on peut associer un réducteur si cela est nécessaire.

**Revendications**

1. Dispositif pour le positionnement d'un organe (66) en vis-à-vis de chacune des perforations (30) d'une plaque perforée (14) selon un réseau donné comprenant un corps (32) portant au moins deux éléments d'accrochage (36, 40), des moyens (54a, 58a, 54b, 58b) pour déplacer ces éléments selon une direction perpendiculaire à la plaque indépendamment l'un de l'autre, de façon à les introduire ou à les extraire d'une perforation en vis-à-vis, des moyens (44a, 46a, 44b, 46b) pour fixer chacun des éléments d'accrochage dans une perforation et des moyens (52, 54) pour déplacer l'un des éléments par rapport à l'autre, caractérisé en ce qu'il comprend un doigt d'accrochage (40, 38b; 138, 140) présentant une surface de guidage (39, 139) sur laquelle est monté de façon démontable le reste du dispositif (26, 126) et des moyens de verrouillage à distance (64, 70; 182, 198) permettant de solidariser le reste du dispositif du doigt d'accrochage, ce dernier comportant l'un (40, 140) des éléments d'accrochage.

2. Dispositif selon la revendication 1, caractérisé en ce que les moyens de verrouillage à distance comprennent un loquet (64) dont le pivotement est commandé par un moteur pour venir en vis-à-vis d'une surface appropriée.

5. Dispositif selon la revendication 1, caractérisé en ce que les moyens de verrouillage à distance comprennent un cliquet (182) qui vient s'engager dans une encoche sous l'action de moyens élastiques (186) et un pion de déverrouillage (204) qui vient dégager le cliquet de l'encoche lorsqu'il est sollicité par des moyens de déverrouillage appropriés (208, 194b).

4. Dispositif selon la revendication 3, caractérisé en ce que les moyens de déverrouillage comprennent un anneau (208) venant en appui sur le pion (204) et dont le déplacement est commandé à distance par un câble (194b) ou par tout moyen analogue.

5. Dispositif selon l'une quelconque des revendications 1 à 4, caractérisé en ce que les éléments d'accrochage (36, 40; 36a, 36b, 40) sont alignés sur une même rangée de perforations (30) et en ce que les moyens pour déplacer l'un des éléments par rapport à l'autre comprennent des moyens (52, 54) pour déplacer chaque élément par rapport à l'autre selon la direction définie par ladite rangée de perforations, sur une distance égale à au moins un pas du réseau, afin de déplacer le dispositif pas à pas selon cette direction, et des moyens (60, 62) pour faire pivoter le dispositif autour d'au moins l'un (40, 140) des éléments d'accrochage afin de changer la direction de déplacement du dispositif, le corps (32) étant réalisé en au moins deux parties (32a, 32b) portant chacune l'un des éléments d'accrochage.

6. Dispositif selon la revendication 5, caractérisé en ce qu'il comprend deux éléments d'accrochage (36, 40).

7. Dispositif selon la revendication 5, caractérisé en ce qu'il comprend trois éléments d'accrochage (36a, 36b, 40) alignés et en ce que le doigt d'accrochage comporte l'élément intermédiaire (40).

8. Procédé de montage à distance d'un dispositif selon l'une quelconque des revendications 1 à 7, dans la boîte à eau d'un générateur de vapeur, caractérisé en ce qu'il comprend les étapes successives suivantes:

— mise en place du doigt d'accrochage (38b, 40; 138, 140) dans une perforation de la plaque au moyen d'une perche (71) par un trou d'homme (24) formé dans la boîte à eau (22) et d'un organe semi-rigide (72) reliant le doigt d'accrochage à l'extérieur de la boîte à eau en passant par le trou d'homme,
— mise en place du reste du dispositif (26, 126) par enfilage sur cet organe de guidage, et
— verrouillage du reste du dispositif sur le doigt d'accrochage.

## Patentansprüche

1. Vorrichtung zum Positionieren eines Organs (66) gegenüber einem jeden von Löchern (30) einer gemäß einem vorgegebenen Raster gelochten Platte (14), mit einem wenigstens zwei Festhalteelemente (36, 40) tragenden Körper (32), Mitteln (54a, 58a, 54b, 58b) zum Verschieben dieser Elemente unabhängig voneinander längs einer zu der Platte senkrechten Richtung derart, diese in ein gegenüberliegendes Loch einzuführen oder aus diesem herauszuziehen, Mitteln (44a, 46a, 44b, 46b) zum Befestigen jedes dieser Festhalteelemente in einem Loch und Mitteln (52, 64) zum Verschieben eines der Elemente in bezug auf das andere, dadurch gekennzeichnet, daß die Vorrichtung einen Festhaltefinger (40, 38b; 138, 140), der eine Führungsfläche (39, 139) aufweist, an der der übrige Teil der Vorrichtung (26, 126) entfernbar befestigt ist, und Fernverriegelungsmittel (64, 70; 182, 198) umfaßt, mit denen der übrige Teil der Vorrichtung an dem Festhaltefinger befestigbar ist, wobei letztgenannter eines (40, 140) der Festhalteelemente umfaßt.

2. Vorrichtung nach Anspruch 1, dadurch gekennzeichnet, daß die Fernverriegelungsmittel eine Klinke (64) umfassen, deren Verschwenkung durch einen Motor steuerbar ist, um gegenüber einer geeigneten Oberfläche zu gelangen.

3. Vorrichtung nach Anspruch 1, dadurch gekennzeichnet, daß die Fernverriegelungsmittel eine Halteklinke (182), die unter der Wirkung elastischer Mittel (186) in Eingriff mit einer Ausnehmung bringbar ist, und ein Entriegelungsteil (204) umfassen, welches die Halteklinke mit der Ausnehmung außer Eingriff bringt, wenn dieses mit geeigneten Entriegelungsmitteln (208, 194b) belastet ist.

4. Vorrichtung nach Anspruch 3, dadurch gekennzeichnet, daß die Entriegelungsmittel einen Ring (208) umfassen, mit dem das Teil (204) belastbar ist und dessen Bewegung über einen Seilzug (194b) oder irgendeine analoge Einrichtung fernsteuerbar ist.

5. Vorrichtung nach einem der Ansprüche 1 bis 4, dadurch gekennzeichnet, daß die Festhalteelemente (36, 40; 36a, 36b, 40) längs derselben Reihe von Löchern (30) ausgerichtet sind und daß die Mittel zum Verschieben eines der Elemente in bezug auf das andere Mittel (52, 54) zum Verschieben eines jeden Elementes in bezug auf das andere längs der durch die Reihe von Löchern festgelegten Richtung um eine Strecke, die wenigstens gleich einem Rasterschritt ist, aufweist, um die Vorrichtung schrittweise längs dieser Richtung zu verschieben, und Mittel (60, 62) umfaßt, um die Vorrichtung um wenigstens eines (40, 140) der Festhalteelemente zu verschwenken, um die Bewegungsrichtung der Vorrichtung zu ändern, und daß der Körper (32) aus wenigstens zwei Teilen (32a, 32b) besteht, von denen jedes eines der Festhalteelemente trägt.

6. Vorrichtung nach Anspruch 5, dadurch gekennzeichnet, daß diese zwei Festhalteelemente (36, 40) umfaßt.

7. Vorrichtung nach Anspruch 5, dadurch gekennzeichnet, daß diese drei ausgerichtete Festhalteelemente (36a, 36b, 40) umfaßt und daß der Festhaltefinger das mittlere Element (40) umfaßt.

8. Verfahren zur Fernbefestigung einer Vorrichtung nach einem der Ansprüche 1 bis 7 in dem Wasserkasten eines Dampfgenerators, dadurch gekennzeichnet, daß das Verfahren die folgenden, aufeinanderfolgenden Schritte umfaßt:

— Anordnen des Festhaltefingers (38b, 40; 138, 140) in einem Loch der Platte mittels einer Stange (71) durch ein Mannloch (24) hindurch, welches in dem Wasserkasten ausgebildet ist, und eines halbsteifen Organs (72), welches durch das Mannloch hindurchgehend den Festhaltefinger mit dem Äußeren des Wasserkastens verbindet,

— Anordnen der übrigen Vorrichtung (26, 126), indem diese auf diesem Führungsorgan eingebracht wird, und

— Verriegeln der übrigen Vorrichtung an dem Festhaltefinger.

## Claims

1. Apparatus for positioning a member (66) facing each of the perforations (30) in a plate (14) which is perforated according to a given pattern, comprising a body (32) having at least two engaging members (36, 40), means (54a, 58a; 54b, 58b) for moving the members in a direction perpendicular to the plate independently of one another whereby to introduce or remove them from a corresponding perforation, means (44a, 46a, 44b, 46b) for fixing each of the engaging members in a perforation, and means (52, 54) for moving one of the members with respect to the other, characterized in that it comprises an engaging finger (40, 38b; 138, 140) having a guide surface (39, 139) on which is removably mounted the remainder of the apparatus (26, 126) and remote locking means (64, 70; 182, 198) enabling the remainder of the apparatus to be immobilized with respect to the engaging finger, said latter comprising one (40, 140) of the engaging members.

2. Apparatus according to Claim 1, characterized in that said remote locking means comprise a latch (64) whose pivotting is controlled by a motor to move into position with respect to an appropriate surface.

3. Apparatus according to Claim 1, characterized in that the remote locking means comprise a pawl (182) which engages a notch under the action of elastic means (186) and an unlocking pin (204) for disengaging the pawl from the notch when it is urged by appropriate unlocking means (208, 194b).

4. Apparatus according to Claim 3, characterized in that the unlocking means comprise a ring (208) moving into contact with the pin (204), and whose displacement is remotely controlled by a cable (194b) or by any analogous means.

5. Apparatus according to any one of Claims 1 to 4, characterized in that the engaging members (36, 40; 36a, 36b, 40) are aligned over the same rank of perforations (30) and in that the means for displacing one of the elements with respect to the other, comprise means (52, 54) for displacing each element with respect to the other in a direction defined by said rank of perforations, over a distance equal to at least one step of the pattern, whereby to displace the apparatus stepwise along said direction, and means (60, 62) for pivotting the apparatus around at least one (40, 140) of the engaging members whereby to change direction of displacement of the apparatus, the body (32) being formed in at least two parts (32a, 32b) each carrying one of the engaging members.

6. Apparatus according to Claim 5, characterized in that it comprises two engaging members (36, 40).

7. Apparatus according to Claim 5, characterized in that it comprises three aligned engaging members (36a, 36b, 40) of which the intermediate member (40) is comprised by the engaging finger.

8. Apparatus for remotely mounting an apparatus according to any one of Claims 1 to 7 in the water chest of a steam generator, characterized in that it comprises the following successive steps:

— placing the engaging finger (38b, 40; 138, 140) in a perforation of the plate by means of a pole (71) through a manhole (24) formed in the water chest (22) and a semi-rigid member (72) connecting the engaging finger to the exterior of the water chest passing through the manhole,
— putting the remainder of the apparatus (26, 126) into position by threading od said guide member, and
— locking the remainder of the apparatus on the engaging finger.

FIG.1

FIG. 5

FIG.2

FIG. 3a

FIG.3b

FIG. 3c

FIG.4